# EUROPEAN PATENT APPLICATION

(11) **EP 1 986 375 A1**
(43) Date of publication of application: **29.10.2008**
(21) Application number: 07290417.0
(22) Date of filing: 05.04.2007
(51) Int. Cl.: H04L 12/56

(54) **Method and node for routing data in a wireless meshed networks**

(71) Applicant: Alcatel Lucent, 75008 Paris (FR)
(72) Inventor: Randriamasy, Claire-Sabine, 92190 Meudon (FR); Capdevielle, Veronique, 78114 Magny Les Hameaux (FR)
(74) Representative: Zinsinger, Norbert

(57) **Abstract**

The invention concerns a method for routing data in a wireless meshed network (1) comprising a plurality of nodes (N1 to N10) connected through links (L1 to L17) and a note for routing data in this wireless meshed network (1). The method comprises execution of an adaptive multi-criteria and multi-path routing method comprising the steps of calculating different routing paths in the wireless meshed network (1) from an originating node to one or more destination nodes; evaluating a plurality of different, preferably weighted, criteria for said routing paths in the wireless meshed network (1), said criteria comprising at least one IP routing specific criterion and at least one radio specific criterion; forming for each routing path a vector comprising said evaluations for said criteria; selecting a set of one or more of said routing paths corresponding to the one or more vectors optimizing said criteria;
generating flow deviation instructions based on the selected set of the one or more of said routing paths; and forwarding the flow deviation instructions to the impacted nodes.

## Description

The present invention relates to a method and a node for routing data in a wireless meshed network, whereby the wireless meshed network comprises a plurality of nodes connected trough links.

Nowadays, multi-hop wireless meshed networks are increasingly gaining interest, due to their commercial advantages, be it to inter-connect home neighborhood networks or Base Stations. Connecting each node to a gateway to internet is costly and important savings can be done by having the nodes networked in a mesh and acting as transit hops to carry each other's traffic towards the best suited exit gateway to internet. A common problem or challenge arises when nodes have to carry traffic that they have not originated. It is mandatory and required to make an appropriate use of the limited bandwidth available, in particular to load-balance the traffic on the network in order to prevent and minimize congestions. This issue is becoming even more important since the traffic today goes to more multi-media, resource-demanding applications with variable data rates.

Solving this problem is by providing additional resources and power is both costly and prone to health related limitations.

A more efficient way is to use an advanced routing in combination with advanced metrics.

For example the document "Comparison of Routing Metrics for static Multi-Hop Wireless Networks" of R. Draves et al., Microsoft Research, ACM SIGCOMM, Portland, Oregon, USA, August 2004, addresses advanced routing metrics. A metric called Expected Transmission Count (ETX) is described for wireless networks that reports the one hop transit delay supposed to also reflect link load: probe packets are sent every second and their reception checked every 10 seconds to estimate loss probability. ETX is the expected number of retransmissions before a packet is successfully delivered and a routing protocol based on the ETX metric is proposed.

In the document "A new paradigm for load balancing in wireless mesh networks" by M. Virendra et al., CSE Dept. TR # 2006-11, State University of New York at Buffalo, May 2006, a load balancing scheme through multi-path routing over load-aware shortest paths is proposed. The traffic of a node to the network exit is evenly split among the shortest feasible paths to each connected gateway. The path length is the addition of the traffic to be routed by each of its links. At the scheduling stage, the nodes are processed according to the decreasing amount of traffic they have to carry. An option consists in distributing the traffic unevenly among the paths according to the number of hops. The method is based on the assumption of a constant bit rate traffic.

It is the object of the invention to provide a flexible and effective method for routing data in a wireless meshed network.

The object of the present invention is achieved by a method for routing data in a wireless meshed network comprising a plurality of nodes connected through links whereby an adaptive multi-criteria routing method is executed which calculates different routing paths in the wireless meshed network from an originating node to one or more destination nodes, evaluates a plurality of different, preferably weighted, criteria comprising at least one IP routing specific criterion and at least one radio specific criterion for said routing paths in the wireless meshed network, forms for each routing path a vector comprising said evaluations for said criteria, selects a set of one or more of said routing paths corresponding to the one or more vectors optimizing said criteria, generates flow deviation instructions based on the selected set of the one or more of said routing paths, and forwards the flow deviation instructions to the impacted nodes. The object of the present invention is also achieved by a node for routing data in a wireless meshed network comprising a plurality of nodes connected through links, whereby the node of said wireless meshed network comprises a control unit adapted to execute an adaptive multi-criteria routing method comprising the steps of: calculating different routing paths in the wireless meshed network from an originating node to one or more destination nodes, evaluating a plurality of different, preferably weighted, criteria comprising at least one IP routing specific criterion and at least one radio specific criterion for said routing paths in the wireless meshed network, forming for each routing path a vector comprising said evaluations for said criteria, selecting a set of one or more of said routing paths corresponding to the one or more vectors optimizing said criteria, generating flow deviation instructions based on the selected set of the one or more of said routing paths, and forwarding the flow deviation instructions to the impacted nodes.

The present invention provides by using an adaptive multi-criteria metric, with at least an IP routing specific metric and at least a radio specific criteria metric, a realistic measure for a routing path in the wireless meshed network. In particular it is possible to adapt even the criteria. By using multiple criteria to evaluate possible routing paths, which are evaluated and organized in a vector for each possible routing path, and selecting by optimization the best routing paths the method provides also load-balancing. Organizing the multiple criteria in a vector produces in a natural way multiple routing paths per destination.

Further advantages are achieved by embodiments of the invention indicated by the dependent claims.

According to a preferred embodiment of the invention the method for routing data uses a standard IP routing method, preferably selecting the routing path with minimal administrative cost, in the case that none of the links is showing a loss of performance and/or a link failure or is prohibited for network management purposes. Preferably, the method can detect or identify such a loss of performance of a link and/or a link failure by means of measuring the available link-bandwidth and/or link-load of the link. A link showing a loss of performance of a link and/or a link failure is also a called critical link. The method triggers the execution of the adaptive multi-criteria routing method, in the case that one or more of the links are showing a loss of performance and/or a link failure.

According to a preferred embodiment of the invention the method triggers the multi-path and multi-criteria routing method at the originating node of any critical link as well as at any remote node that is upstream of said originating node and that comprises said critical link on its path to one or more of the gateways.

According to a preferred embodiment of the invention the method checks periodically, if one of the links is showing a loss of performance and/or a link failure or is prohibited for network management purposes. The method can perform the check every 1 sec to 20 sec, preferably every 10 sec in order to determine, if one of the links is showing a loss of performance and/or a link failure. When the method detects such link, a so-called critical link, then the method sends to all nodes or to a pre-set subset of the nodes a signaling messages comprising information about the critical link showing a loss of performance and/or a link failure. Preferably, the pre-set subset comprises all nodes of the wireless meshed network which comprise the critical link within their routing table or routing database.

It is possible that the method checks periodically every 1 sec to 60 sec, preferably every 10 sec whether one or more of the links are showing a loss performance and/or a link failure. The method can detect or identify such a loss of performance of a link and/or a link failure by means of measuring the available link-bandwidth and/or link-load of the link. The method can detect or identify such a loss of performance of a link and/or a link failure when the measured available link-bandwidth percentage of the link is below a certain threshold value, preferably less than 10% to 20%, and/or the measured link-load of the link exceeds a certain threshold value, preferably of more than 80% to 90%. Preferably, every link is checked whether the link is showing a loss of performance and/or a link failure by only one of its two dedicated or defining nodes. The threshold values in percentage are well set above 0% for the available link-bandwidth and well below 100% for the link-load in order to prevent actively data traffic congestions and/or instabilities of the wireless meshed network.

Further-on, the method can provide the stopping of shifting of data flows to the selected routing paths as soon as the link which has shown a loss of performance and/or a link failure is operating normally. A link is operating normally as long as no loss of performance of the link and/or the link failure is detected. Preferably, the method detects or identifies that the link is operating normally when an available link-bandwidth percentage of the link is exceeding a certain threshold value, preferably more than 25% to 35%, and/or a link-load of the link is below a certain threshold value, preferably of less than 65% to 75%. According to a preferred embodiment of the invention the method detects if one of the links is showing a loss of performance and/or a link failure. The method triggers the execution of the adaptive multi-criteria routing method at all impacted nodes of the wireless meshed network. All nodes that comprise the link showing a loss of performance and/or a link failure on their routing path to a gateway node and/or a core node are impacted nodes.

According to a preferred embodiment of the invention if the destination node of an initial routing path impacted by showing a loss of performance and/or a link failure is a gateway node, then the method calculates all routing paths from the originating node to all the gateway nodes of the wireless meshed network. Further-on, the method selects a number of M best paths to all the gateway nodes as selected set of routing paths. Selecting a plurality of destination gateway nodes is advantageously, because a natural load-balance of the wireless meshed network is generated.

According to a preferred embodiment of the invention if the destination node of an initial routing path impacted by showing a loss of performance and/or a link failure is a core node, then the method calculates all routing paths from the originating node to the core node of the wireless meshed network. Further-on, the method selects a number of M best paths to the core node as selected set of routing paths.

According to a preferred embodiment of the invention the method multiplies one or more elements, preferably all elements, of the vector comprising said evaluations for different criteria by a, preferably different, weight factor. One or more of the weight factors can be equal to 0 or 1. Using a weight factor equal to 0 is equivalent to omitting the corresponding criterion. Preferably, the number of weight factors is equal to the number of different criteria evaluated for each routing path.

According to a preferred embodiment of the invention if a node in the wireless meshed network is not critical but is aware of having a critical link on its path to a gateway, then the method calculates all routing paths from this node itself to all the gateway nodes of the wireless meshed network. Further-on, the method selects a number of M best paths to all the gateway nodes as selected set of routing paths.

According to a preferred embodiment of the invention the method computes the proportion of data traffic to be rerouted and deviated from the initial routing path to the selected set of routing paths. The proportion of data traffic is calculated correspondingly to the costs of the selected set of routing paths, whereby the costs of the selected set of routing paths are determined by means of said vectors. The method generates the flow deviation instructions for the impacted nodes to shift the traffic load accordingly to said routing paths.

According to a preferred embodiment of the invention method generates a plurality of intermediate flow deviation instructions corresponding to the selected set of routing paths. The method generates the set of intermediate flow deviation instructions in such a way that the traffic is shifted progressively towards the selected set of routing paths.

Preferably, the method comprises further intermediate steps within the step of selecting a set of one or more of said routing paths corresponding to one or more vectors optimizing said criteria. It is possible to predetermine a number M, preferably a number less than a number of routing paths or equal to a number of routing paths, of different routing paths to be selected as the set of the one or more of said routing paths corresponding to one or more vectors optimizing the criteria. The method can extract a number of the one or more Pareto-optimal vectors optimizing said criteria equal to the predetermined number M. Particularly, as many as possible optimal routing paths are selected in order to reduce the increase of load at the links and/or the nodes.

Preferably, the criteria comprise one or more of the following IP routing specific criteria: the number of hops along one routing path, the minimum of available bandwidth on the links along one routing path, administrative costs along one routing path and the transit delay on the links along the path.

Preferably, the criteria comprise one or more of the following radio specific criteria: the sum of an additive function F(SNR) of the SNR (SNR = Signal to Noise Ratio) along one routing path, the sum of an additive function F(SNR) the SIR (SIR = Signal to Interference Ratio) along one routing path, the sum of an additive function F(SNR) of the SIR (SINR = Signal to Interference and Noise Ratio) along one routing path.

Further-on, it is possible to route a single data traffic of one single data flow only along one single routing path in order to maintain time-ordered arrival of data packets belonging together.

Preferably, the method evaluates simultaneously or in parallel the plurality of different criteria for said routing paths, whereby the plurality of different criteria is organized as a vector assigned to one of said routing paths. It is possible to deduce a scalar-form from said vectors. The scalar-form of said vectors can be optimized, whereby none, one or more of the different criteria organized in said vector assigned to one of said routing paths are minimized and none, one, more or all of the remaining other different criteria are maximized. The scalar form of said vector is a measure of cost and/or ranking for a single routing path. Preferably, the vectors are ordered accordingly to their cost and/or ranking.

It is also possible that the method adapts and/or updates the different criteria for evaluating the different routing paths and/or the corresponding weight factors. The adaptation and/or the updating of the different criteria and the corresponding weight factors can be done, preferably periodically, every 1 sec to 60 sec.

It is further possible by the method that the computation of the proportion of data traffic to be rerouted and deviated from the initial routing path is weighted, preferably in accordance to the computed path cost that reflect the available link bandwidth, in order to load-balance the link-load of the impacted links to maintain network stability.

Preferably, the node for routing data in a wireless-meshed network comprises wire-less connection means and connection means to wire-based networks, preferably the Internet. The node can be adapted to perform as gateway of wire-based networks and wireless meshed networks.

These as well as further features and advantages of the invention will be better appreciated by reading the following detailed description of presently preferred exemplary embodiments taken with the accompanying drawing of:

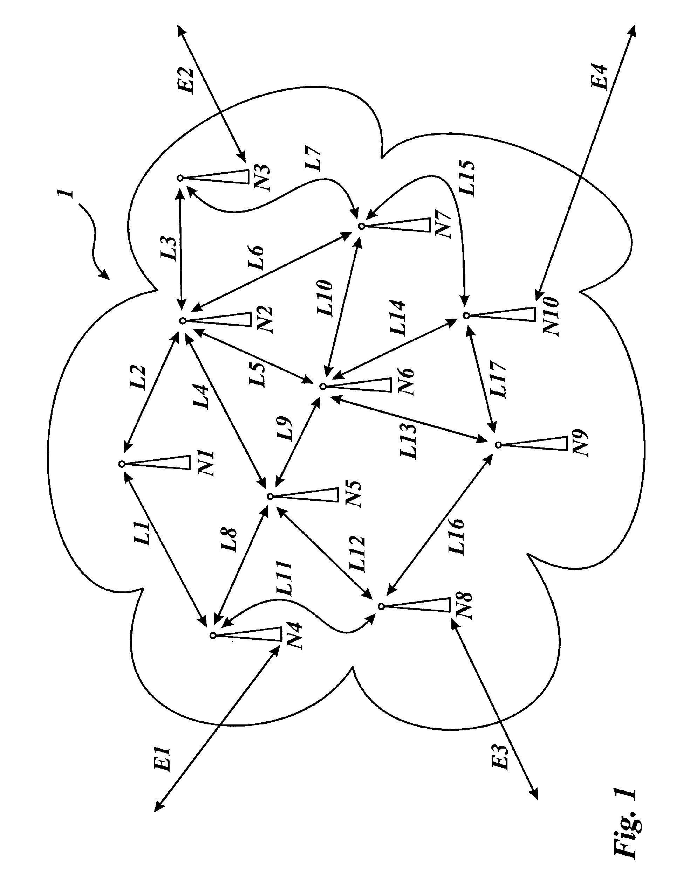

- Figure 1: is a diagram of a wireless meshed network comprising components of an embodiment of the invention.

Figure 1 shows a wireless meshed network 1 comprising nodes N1 to N10. The nodes N1 to N10 of the wireless meshed network 1 are interconnected through wireless links L1 to L17. The nodes N3, N4, N8 and N10 comprise in addition connection means to wire-based networks, preferably the internet. The nodes N3, N4, N8 and N10 further provide gateway functionality between wire-based networks and meshed wireless networks. The nodes N3, N4, N8 and N10 are connected to the wire-based networks through links E1 to E4.

The nodes N1 to N10 of the wireless meshed network are WiFi (WiFi = Wireless Fidelity) nodes or WiMAX nodes (WiMAX = Worldwide Interoperability for Microwave Access). The gateway nodes N3, N4, N8 and N10 comprise in addition Ethernet-Network card and/or DSL-modem (DSL = Digital Subscriber Line). All nodes N1 to N10 comprise a scheduling unit which controls the routing behavior of the respective node within the wireless meshed network 1.

Each node N1 to N10 of the wireless meshed network 1 comprises a hardware and software platform, a scheduling unit and application programs. By means of one or more application programs the method for routing data is executed on the hardware and software platform of the respective node. The scheduling unit does not only receives but forwards also the flow deviation instructions to the nodes of the wireless meshed network. The rerouting of the data traffic and the execution of the method for routing data is handled by a software control unit linked to the scheduling unit of the node. The scheduling unit has access to the routing database or routing table of the wireless meshed network 1. It is also possible that the routing method is executed by a network server comprising a central scheduling unit that has access to the routing database or routing table of two or more nodes of the wireless meshed network 1, and means to access wireless and/or wire-based networks.

On hand of Figure 1 two general cases are described exemplarily. There is a principle classification in two cases, i.e. the class of routing data packets to a single destination core node and the class of routing data packets to a plurality of destination gateway nodes. In the first case data packets of one data flow transmitted form the originating node N7 to the destination core node N5, whereby the data flow is routed along a single routing path through the node N6. In the second case data packets of one data flow transmitted from the originating node N7 to the destination gateway node N4, whereby also in this case the data flow is routed along a single routing path, but through the nodes N6 and N5. The data flow is further transmitted to an external network, e.g. the internet, via the link E1 by the gateway node N4.

As long as none of the links L1 to L17 is showing a loss of performance and/or a link failure, the method for routing data uses a standard IP routing method.

Preferably, the method selects the routing path with minimal administrative cost or the minimal number of hops. Keeping the default routing method simple is advantageous, because simple routing methods are robust, not resource demanding and keep the wireless meshed network operating stable.

To identify or to determine whether one of the links L1 to L17 is showing a loss of performance and/or a link failure the method performs a check every 1 sec to 20 sec, preferably every 10 sec. The method detects or identifies such a loss of performance of a link and/or a link failure by means of measuring the available link-bandwidth and/or link-load of the link. The critical link is detected when the measured available link-bandwidth percentage of the link is below a threshold value of 15%, or the measured link-load of the link exceeds a threshold value of 85%. To limit the administrative load the wireless meshed network 1 every link is checked by only one of its two dedicated or defining nodes. The threshold values in percentage are well set above 0% for the available link-bandwidth and well below 100% for the link-load in order to prevent actively data traffic congestions and/or instabilities of the wireless meshed network 1.

When one node detects such a link, a so-called critical link, or even more critical links, then the node sends to all nodes N1 to N10 or to a pre-set subset of the nodes signaling messages comprising information about the one or more critical links. In this case the adaptive multi-criteria routing method is triggered at all nodes of the wireless meshed network 1 which are impacted by the critical link. Preferably, if a directed link L(I,J) between the nodes I and J is critical with originating node I and end node J, the method is triggered at node I and at all nodes that have L(I,J) on their path to an Internet gateway.

In the following it is assumed that the link L10 has been found to be critical.

In a first step, the routing method is triggered at the originating node of L10. Each destination for which the end node N6 of L10 is he next hop is checked. In the first case, that is the currently checked destination is a core node, all possible different routing paths originating at the node N7 with the destination core node N5 are calculated under the condition that none of the routing paths includes the link L10. For each different routing path a plurality of different criteria is evaluated. At least one IP routing specific criteria is evaluated. One or more of the following IP routing specific criteria are evaluated: the number of hops along one routing path, the minimum of available link-bandwidth of the nodes along one routing path, the cumulated transit delay along the path, administrative costs along one routing path. In addition at least one radio specific criterion is evaluated. One or more of the following radio specific criteria are evaluated: the sum of an additive function F(SNR) of the SNR (SNR = Signal to Noise Ratio) along one routing path, the sum of an additive function F(SIR) of the SIR (SIR = Signal to Interference Ratio) along one routing path, the sum of an additive function F(SINR) of the SIR (SINR = Signal to Interference and Noise Ratio) along one routing path.

The plurality of evaluated criteria is organized in form of a vector for each of the possible different routing paths. The method evaluates simultaneously or in parallel the plurality of different criteria for said routing paths. Further-on, one or more elements, preferably all elements, of the vector comprising said evaluations for different criteria is multiplied by a, preferably different, weight factor. A scalar-form is deduced from said vector. The scalar-form of said vector is optimized, whereby none, one or more of the different criteria organized in said vector assigned to one of said routing paths are minimized and none, one, more or all of the remaining other different criteria are maximized. The scalar form of said vector is a measure of cost and ranking for a single routing paths.

The vectors are ordered accordingly to their cost and ranking. The M best paths to destination core node N5 are selected. For example the method returns M=3 Pareto-optimal paths: N7 - N2 - N5, N7 - N10 - N9 - N8 - N5, and N7 - N10 - N6 - N5.

The initial data traffic routed through the critical link L10 is proportional distributed to the three paths N7 - N2 - N5, N7 - N10 - N9 - N8 - N5, and N7 - N10 - N6 - N5 according to the cost given by the scalar form of these three paths such these paths equally share the additional load. In order to reroute the data traffic the method generates corresponding flow deviation instructions, which are forwarded to scheduling modules of the impacted nodes N2, N6, N8, N9, N10, via their control units. Actually, in order to maintain network stability there are several intermediate flow deviation instructions generated which are forwarded to the impacted nodes N2, N6, N8, N9, N10 unequally and progressively. Therefore the change of the routing through the wireless meshed network 1 is a smooth procedure which adapts progressively towards the optimal routing paths N7 - N2 - N5, N7 - N10 - N9 - N8 - N5, and N7 - N10 - N6 - N5.

It is advantageous if the flow deviation instructions single data traffic of a single data flow, like data packets of real-time applications, are routed all along the same routing path. This is desired, since time-ordered arrival of data packets belonging together is guaranteed.

Finally, as soon as a node, e.g. the node N7, detects that the link L10 is operating normally the shifting of the data flows to the selected routing paths N7 - N2 - N5, N7 - N10 - N9 - N8 - N5, and N7 - N10 - N6 - N5 is terminated progressively by the scheduling unit of the impacted nodes. The method or node detects or identifies that the link L10 is operating normally when an available link-bandwidth percentage of the link exceeds a certain threshold value preferably of 25%, and the link-load of the link drops below the threshold value preferably of 65%.

The second case, where the currently checked destination is a gateway to Internet goes analogously to the first case, but with the following difference:

In the second case all possible different routing paths originating at the node N7 to all gateway nodes N3, N4, N8 and N10 are calculated under the condition that none of the routing paths includes the link L10. Since the initial destination node N4 is a gateway node, this node can be replaced by all gateway nodes N3, N4, N8 and N10 of the wireless meshed network 1. The method generatesin that case , for example M=3 Pareto-optimal paths N7 - N3, N7 - N2 - N1 - N4, and N7 - N10, but in contrary to the first case they go to different destination gateway nodes N3, N4, and N10.

In a second step, the routing is triggered at all remote nodes that are located upstream of the originating node N7 and whose routing table comprise one or more gateways and for which the path to one or more of these gateways comprises the critical link. The remote node then proceeds like in the second case: compute the best path to all the possible other gateways and deviate the traffic from the initial to these other "deviation" gateways.

## Claims

1. Method for routing data in a wireless meshed network (1) comprising a plurality of nodes (N1 to N10) connected through links (L1 to L17),
whereby the method comprises execution of an adaptive multi-criteria and multi-path routing method comprising the steps of:
calculating different routing paths in the wireless meshed network (1) from an originating node to one or more destination nodes;
evaluating a plurality of different, preferably weighted, criteria for said routing paths in the wireless meshed network (1), said criteria comprising at least one IP routing specific criterion and at least one radio specific criterion; forming for each routing path a vector comprising said evaluations for said criteria;
selecting a set of one or more of said routing paths corresponding to the one or more vectors optimizing said criteria;
generating flow deviation instructions based on the selected set of the one or more of said routing paths; and
forwarding the flow deviation instructions to the impacted nodes.

2. The method according to Claim 1,
**characterized in,**
**that** the method for routing data comprises the further steps of:
using a standard IP routing method, preferably selecting the routing path with minimal administrative cost, in the case that none of the links (L1 to L17) is showing a loss of performance and/or a link failure or is prohibited for network management purposes; and
triggering the execution of the adaptive multi-criteria routing method, in the case that one or more of the links (L1 to L17) are showing a loss of performance and/or a link failure.

3. The method according to Claim 1,
**characterized in,**
**that** the method for routing data comprises the further steps of:
checking periodically, if one of the links (L1 to L17) is showing a loss of performance and/or a link failure or is prohibited for network management purposes; and
when detecting such link, sending to all nodes (N1 to N10) or to a pre-set subset of the nodes (N1 to N10) a signaling messages comprising information about the link showing a loss of performance and/or a link failure.

4. The method according to Claim 1,
**characterized in,**
**that** the method for routing data comprises the further steps of:
detecting if one of the links (L1 to L17) is a critical link showing a loss of performance and/or a link failure; and
triggering the multi-path and multi-criteria routing method at the originating node of any critical link as well as at any remote node that is upstream of said originating node and that comprises said critical link on its path to one or more of the gateways.

5. The method according to Claim 1,
**characterized in,**
**that** the method for routing data comprises the further steps of:
if the destination node of a critical link between the nodes I and J impacted by showing a loss of performance and/or a link failure is a gateway node, performing the steps of:
calculating all routing paths from the originating node I to all the gateway nodes of the wireless meshed network (1) and selecting a number of M best paths to all the gateway nodes as selected set of routing paths.

6. The method according to Claim 1,
**characterized in,**
**that** the method for routing data comprises the further steps of:
if the destination node of a critical link impacted by showing a loss of performance and/or a link failure is a core node, performing the steps of:
calculating all routing paths from the originating node to the core node of the wireless meshed network (1) and selecting a number of M best paths to the core node as selected set of routing paths.

7. The method according to Claim 1,
**characterized in,**
**that** the method for routing data comprises the further steps of:
if a node in the wireless meshed network (1) is not critical but is aware of having a critical link on its path to a gateway, performing the steps of:
calculating all routing paths from this node itself to all the gateway nodes of the wireless meshed network (1) and selecting a number of M best paths to all the gateway nodes as selected set of routing paths.

8. The method according to Claim 1,
**characterized in,**
**that** the method for routing data comprises the further steps of:
computing the proportion of data traffic to be rerouted and deviated from the initial routing path to the selected set of routing paths corresponding to costs determined by means of said vectors; and
generating the flow deviation instructions for the impacted nodes to shift the traffic load accordingly to said routing paths.

9. The method according to Claim 1,
**characterized in,**
**that** the method for routing data comprises the further steps of:
generating a plurality of intermediate flow deviation instructions corresponding to a set of intermediate routing paths, whereby adapting the set of intermediate routing paths progressively towards the selected set of routing paths.

10. Node for routing data in a wireless meshed network (1) comprising a plurality of nodes (N1 to N10) connected through links (L1 to L17),
**characterized in,**
**that** the node of said wireless meshed network (1) comprises a control unit adapted to execute an adaptive multi-criteria routing method comprising the steps of:
calculating different routing paths in the wireless meshed network (1) from an originating node to one or more destination nodes;
evaluating a plurality of different, preferably weighted, criteria for said routing paths in the wireless meshed network (1), said criteria comprising at least one IP routing specific criterion and at least one radio specific criterion;
forming for each routing path a vector comprising said evaluations for said criteria;
selecting a set of one or more of said routing paths corresponding to the one or more vectors optimizing said criteria;
generating flow deviation instructions based on the selected set of the one or more of said routing paths; and
forwarding the flow deviation instructions to the impacted nodes.

## Amended claims

### Amended claims in accordance with Rule 137(2) EPC.

**1.** Method for routing data in a wireless meshed network (1) comprising a plurality of nodes (N1 to N10) connected through links (L1 to L17), wherein the method for routing data comprises the steps of:
using a standard IP routing method, preferably selecting a routing path with minimal administrative cost, in the case that none of the links (L1 to L17) is showing a loss of performance and/or a link failure or is prohibited for network management purposes; and
triggering the execution of and executing an adaptive multi-criteria routing method, in the case that one or more of the links (L1 to L17) are showing a loss of performance and/or a link failure,
the execution of the adaptive multi-criteria and multi-path routing method comprising the steps of:
calculating different routing paths in the wireless meshed network (1) from an originating node to one or more destination nodes;
evaluating a plurality of different, preferably weighted, criteria for said routing paths in the wireless meshed network (1), said criteria comprising at least one IP routing specific criterion and at least one radio specific criterion; forming for each routing path a vector comprising said evaluations for said criteria;
selecting a set of one or more of said routing paths (N7 - N2 - N5, N7 - N10 - N9 - N8 - N5, N7 - N10 - N6 - N5) corresponding to the one or more vectors optimizing said criteria;
generating flow deviation instructions based on the selected set of the one or more of said routing paths (N7 - N2 - N5, N7 - N10 - N9 - N8 - N5, N7 - N10 - N6 - N5); and
forwarding the flow deviation instructions to the impacted nodes.

**2.** The method according to Claim 1,
**wherein,**
the method for routing data comprises the further steps of:
checking periodically, if one of the links (L1 to L17) is showing a loss of performance and/or a link failure or is prohibited for network management purposes; and
when detecting such link, sending to all nodes (N1 to N10) or to a pre-set subset of the nodes (N1 to N10) a signaling messages comprising information about the link showing a loss of performance and/or a link failure.

**3.** The method according to Claim 1,
**wherein,**
the method for routing data comprises the further steps of:
detecting if one of the links (L1 to L17) is a critical link showing a loss of performance and/or a link failure; and
triggering the multi-path and multi-criteria routing method at the originating node of any critical link as well as at any remote node that is upstream of said originating node and that comprises said critical link on its path to one
or more of the gateways (N3, N4, N8, N10).

**4.** The method according to Claim 1,
**wherein,**
the method for routing data comprises the further steps of:
if the destination node of a critical link between the nodes I and J impacted by showing a loss of performance and/or a link failure is a gateway node, performing the steps of:
calculating all routing paths from the originating node I to all the gateway nodes (N3, N4, N8, N10) of the wireless meshed network (1) and selecting a number of M best paths to all the gateway nodes (N3, N4, N8, N10) as selected set of routing paths.

**5.** The method according to Claim 1,
**wherein,**
the method for routing data comprises the further steps of:
if the destination node of a critical link impacted by showing a loss of performance and/or a link failure is a core node, performing the steps of:
calculating all routing paths from the originating node to the core node of the wireless meshed network (1) and selecting a number of M best paths to the core node as selected set of routing paths (N7 - N2 - N5, N7 - N10 - N9 - N8 - N5, N7-N10-N6-N5).

**6.** The method according to Claim 1,
**wherein,**
the method for routing data comprises the further steps of:
if a node in the wireless meshed network (1) is not critical but is aware of having a critical link on its path to a gateway, performing the steps of:
calculating all routing paths from this node itself to all the gateway nodes (N3, N4, N8, N10) of the wireless meshed network (1) and selecting a number of M best paths to all the gateway nodes (N3, N4, N8, N10) as selected set of routing paths.

**7.** The method according to Claim 1,
**wherein,**
the method for routing data comprises the further steps of:
computing the proportion of data traffic to be rerouted and deviated from the initial routing path to the selected set of routing paths (N7 - N2 - N5, N7 - N10 - N9 - N8 - N5, N7 - N10 - N6 - N5) corresponding to costs determined by means of said vectors; and
generating the flow deviation instructions for the impacted nodes to shift the traffic load accordingly to said routing paths (N7 - N2 - N5, N7 - N10 - N9 - N8 - N5, N7-N10-N6-N5).

**8.** The method according to Claim 1,
**wherein,**
the method for routing data comprises the further steps of:
generating a plurality of intermediate flow deviation instructions corresponding to a set of intermediate routing paths, whereby adapting the set of intermediate routing paths progressively towards the selected set of routing paths (N7 - N2 - N5, N7 - N10 - N9 - N8 - N5, N7 - N10 - N6 - N5).

**9.** Node for routing data in a wireless meshed network (1) comprising a plurality of nodes (N1 to N10) connected through links (L1 to L17),
**wherein,**
the node of said wireless meshed network (1) comprises a control unit adapted to execute a method for routing data comprises the steps of:
using a standard IP routing method, preferably selecting a routing path with minimal administrative cost, in the case that none of the links (L1 to L17) is showing a loss of performance and/or a link failure or is prohibited for network management purposes; and
triggering the execution of and executing an adaptive multi-criteria routing method, in the case that one or more of the links (L1 to L17) are showing a loss of performance and/or a link failure,
the adaptive multi-criteria routing method comprising the steps of:
calculating different routing paths in the wireless meshed network (1) from an originating node to one or more destination nodes;
evaluating a plurality of different, preferably weighted, criteria for said routing paths in the wireless meshed network (1), said criteria comprising at least one IP routing specific criterion and at least one radio specific criterion;
forming for each routing path a vector comprising said evaluations for said criteria;
selecting a set of one or more of said routing paths (N7 - N2 - N5, N7 - N10 - N9 - N8 - N5, N7 - N10 - N6 - N5) corresponding to the one or more vectors optimizing said criteria;
generating flow deviation instructions based on the selected set of the one or more of said routing paths (N7 - N2 - N5, N7 - N10 - N9 - N8 - N5, N7 - N10 - N6 - N5); and
forwarding the flow deviation instructions to the impacted nodes.
